# EUROPÄISCHE PATENTSCHRIFT

(11) **EP 2 101 264 B1**
(45) Veröffentlichungstag und Bekanntmachung des Hinweises auf die Patenterteilung: **14.06.2017**
(21) Anmeldenummer: 09100143.8
(22) Anmeldetag: 25.02.2009
(51) Int. Cl.: G06F 11/07

(54) **Verfahren zur Fehlerbehandlung und Tachographensystem**
Method for error treatment and tachography system
Procédé de traitement d'erreurs et système de tachygraphe

(30) Priorität: 06.03.2008 DE 102008013070
(43) Veröffentlichungstag der Anmeldung: 16.09.2009
(73) Patentinhaber: Continental Automotive GmbH, 30165 Hannover (DE)
(72) Erfinder: Näther, Horst, 78052 Villingen-Schwenningen (DE)

(56) Entgegenhaltungen:
- WO-A1-97/07456
- US-A- 5 408 218
- US-A- 5 740 357
- US-B1- 7 017 075

## Beschreibung

Die Erfindung betrifft ein Verfahren zur Fehlerbehandlung in einem Programmsystem in einem digitalen Tachographensystem sowie ein Tachographensystem, in dem ein Programmsystem ausgeführt wird.

Fahrtenschreiber oder Tachographensysteme können Kontrollgeräte sein, die dafür vorgesehen sind, in einem Kraftfahrzeug, insbesondere in einem Güter- oder Fahrgäste-Transportfahrzeug, installiert zu werden, um eine Überwachung der Aktivitäten eines Fahrers des Fahrzeugs zu ermöglichen. Ein Fahrtenschreiber hat dabei insbesondere die Funktion, Fahrerdaten bezüglich Aktivitäten eines Fahrers des Fahrzeugs aufzuzeichnen, zu verarbeiten und zu speichern, um die Überwachung dieser Aktivitäten durch einen Kontrolleur zu ermöglichen.

Frühere Fahrtenschreiber mit Scheiben sind heutzutage durch elektronische Fahrtenschreiber mit digitaler Datenspeicherung ersetzt, welche auch als digitale Fahrtenschreiber bezeichnet werden können. Derartige digitale Fahrtenschreiber sind im europäischen Raum auch beispielsweise in neu zugelassenen Fahrzeugen zum Gütertransport vorgeschrieben.

Im Betrieb des Fahrzeugs erfolgt durch das Tachographensystem eine Aufzeichnung, Speicherung und Verarbeitung von Fahrzeugbetriebsparametern, insbesondere von Geschwindigkeiten und Fahrzeiten, aber auch anderen Informationen. Geschwindigkeitsdaten werden dabei von einem Geschwindigkeitsgeber an eine Aufzeichnungseinheit übermittelt und dort ausgewertet und gespeichert. Ferner können die gespeicherten Daten gedruckt werden oder über eine Schnittstelle von einem externen Kontrollgerät ausgelesen werden. Zum Betrieb des Fahrtenschreibers kann es ferner notwendig sein, eine Chipkarte auszulesen, welche beispielsweise einer Authentisierung eines Benutzers des Fahrtenschreibers dient.

Entsprechende Baugruppen, die die beschriebenen Funktionen verwirklichen, werden dabei über ein Programmsystem gesteuert, das beispielsweise in einem programmierbaren Microcontroller oder in einem anderen Prozessor ausgeführt wird. Für verschiedene Einheiten in den Baugruppen sind dazu einzelne Programmmodule im Programmsystem vorgesehen, welche Steuer- und Regelfunktionen, ein Erfassen von Daten, eine Umsetzung von Kommunikationsprotokollen oder andere Aufgaben ausführen. Anders ausgedrückt erfolgt durch das Programmsystem mit den Programmmodulen eine Ein-/Ausgabesteuerung für beliebige Daten des Tachographensystems.

In derartigen Programmsystemen kann beim Auftreten eines Fehlers das ganze Programmsystem zurückgesetzt und neu gestartet werden, um zu definierten Zuständen zurückzukehren. Der Neustart eines Programmsystems bringt jedoch unter Umständen andere Probleme mit sich, da auch Programmmodule zurückgesetzt werden, die ordnungsgemäß arbeiten beziehungsweise gearbeitet haben. Ein Neustart kann deren Funktion beeinträchtigen und sogar zu einem Datenverlust im Programmsystem führen. Des Weiteren kann bei einer derartigen Maßnahme auch nicht ausgeschlossen werden, dass das Programmsystem ein unübersehbares Verhalten einnimmt. PCT WO97/07456 offenbart eine Fehlerbehandlung in einer Telefonanlage bei der es spezialisierte Fehlerbehandlingsroutinen gibt, welche bestimmte Fehlertypen analysieren und behandeln können. Es ist Aufgabe der Erfindung, ein Verfahren zur Fehlerbehandlung in einem Programmsystem in einem digitalen Tachographensystem sowie ein Tachographensystem, in dem ein derartiges Programmsystem ausgeführt wird, anzugeben, bei denen die Nachteile eines Neustarts des gesamten Programmsystems vermieden werden.

Diese Aufgabe wird mit den Gegenständen der unabhängigen Patentansprüche gelöst. Ausgestaltungsformen und Weiterbildungen der Erfindung sind Gegenstand der Unteransprüche.

Ein Programmsystem in einem digitalen Tachographensystem weist beispielsweise ein Betriebssystem und eine Gruppe von Programmmodulen auf, die durch das Betriebssystem ansteuerbar und einer ersten oder wenigstens zweiten Funktionsgruppe zugeordnet sind.

In einem Ausführungsbeispiel eines Verfahrens zur Fehlerbehandlung in einem derartigen Programmsystem wird beim Auftreten eines Fehlerzustands in einem Programmmodul aus der Gruppe von Programmmodulen des Programmsystems eine lokale Fehlermeldung durch das betroffene Programmmodul an das Betriebssystem gesendet. Das Betriebssystem kann daraufhin in Abhängigkeit der lokalen Fehlermeldung die dem betroffenen Programmmodul zugeordnete Funktionsgruppe ermitteln. Des Weiteren werden von dem Betriebssystem in Abhängigkeit der lokalen Fehlermeldung jeweilige Fehlerbehandlungsfunktionen für weitere Programmmodule aus der Gruppe von Programmmodulen ermittelt, welche der Funktionsgruppe des betroffenen Programmmoduls, in dem der Fehlerzustand aufgetreten ist, zugeordnet sind. Das Betriebssystem ruft die jeweils ermittelten Fehlerbehandlungsfunktionen für die weiteren Programmmodule auf. Diese Fehlerbehandlungsfunktionen werden somit in den zugehörigen entsprechenden Programmmodulen der weiteren Programmmodule ausgeführt.

Das Programmsystem in dem digitalen Tachographensystem weist beispielsweise verschiedene Programmmodule auf, die sich in jeweilige Funktionsgruppen einteilen lassen. Diese Funktionsgruppen entsprechen beispielsweise Bauteilgruppen des Tachographensystems, die eine physische oder logische Einheit, beispielsweise auf funktioneller Basis, bilden. Die Programmmodule einer Funktionsgruppe sind zum Beispiel durch Schnittstellen verbunden, welche als Softwareschnittstellen ausgeführt sind und vorzugsweise Puffer oder Zwischenspeicher umfassen. Die Programmmodule einer Funktionsgruppe haben somit untereinander Abhängigkeiten, die auch eine gewisse Komplexität erreichen können. Programmmodule anderer Funktionsgruppen sind jedoch üblicherweise unabhängig von diesen Programmmodulen. Beim Auftreten eines Fehlerzustands ist es daher nicht zwingend notwendig, dass Funktionen eines Programmmoduls einer anderen Funktionsgruppe beeinträchtigt sind und einen Neustart des anderen Programmmoduls bedingen.

Die Programmmodule des Programmsystems werden von einem Betriebssystem beispielsweise als nebenläufige Prozesse in einem Multitaskingbetrieb ausgeführt. Eine Steuerung, welches Programmmodul zu welcher Zeit ausgeführt wird, erfolgt also durch das Betriebssystem. Hierbei können in den Programmmodulen auch einzelne Funktionen aufgerufen werden und/oder entsprechende Funktionsparameter übergeben werden.

Vorzugsweise weist jedes Programmmodul eine eigene Fehlererkennungsroutine oder einen eigenen Fehlererkennungsmechanismus auf, die beim Auftreten eines Fehlerzustands in dem Programmmodul eine entsprechende lokale Fehlermeldung an das Betriebssystem absenden.

Vorzugsweise enthält die lokale Fehlermeldung des Programmmoduls eine Information über die Zuordnung zu der entsprechenden Funktionsgruppe. Alternativ kann das Betriebssystem auch durch Identifikation des Absenders der lokalen Fehlermeldung das entsprechende Programmmodul und die zugehörige Funktionsgruppe ermitteln.

Zur Ermittlung der Fehlerbehandlungsfunktionen, die beim Auftreten eines Fehlerzustands aufgerufen werden sollen, weist das Programmsystem vorzugsweise eine Tabelle auf, in der eine Vielzahl von Sätzen von Fehlerbehandlungsfunktionen abgelegt sind. Beim Ermitteln der Fehlerbehandlungsfunktionen wird vom Betriebssystem ein Satz der Vielzahl von Sätzen aus der Tabelle ausgelesen. Das Auslesen erfolgt vorzugsweise in Abhängigkeit der ermittelten Funktionsgruppe, so dass beim Auftreten eines Fehlerzustands in einem beliebigen Programmmodul aus den Programmmodulen der Funktionsgruppe jeweils der gleiche Satz von Fehlerbehandlungsfunktionen ausgelesen wird.

Ferner kann eine weitere Differenzierung für die Auswahl eines Satzes von Fehlerbehandlungsfunktionen auch auf der Information über das Programmmodul, in dem der Fehlerzustand aufgetreten ist, basieren. In diesem Fall ist in der Tabelle für jedes Programmmodul und einen möglichem Fehlerzustand in dem Programmmodul ein jeweils eigener Satz von Fehlerbehandlungsfunktionen abgelegt.

Eine Reihenfolge des Aufrufs der ermittelten Fehlerbehandlungsfunktionen kann beliebig oder vorzugsweise vorbestimmt erfolgen. Im vorbestimmten Fall ist die Reihenfolge beispielsweise durch eine Reihenfolge in der Ablage innerhalb einer Tabelle oder durch eine zusätzliche Reihenfolgeninformation gegeben. Bei einer vorgegebenen Reihenfolge des Aufrufs der Fehlerbehandlungsfunktionen können beispielsweise Programmmodule, die für das Abarbeiten der Fehlerbehandlungsfunktionen eine längere Zeit benötigen, vor denjenigen Programmmodulen aufgerufen werden, die in kürzerer Zeit die Fehlerbehandlungsfunktion abarbeiten können. Beispielsweise führt das Ausführen der Fehlerbehandlungsfunktionen zum Rücksetzen des entsprechenden Programmmoduls, so dass bei vorbestimmter Reihenfolge die Programmmodule einer Funktionsgruppe möglichst schnell wieder einen definierten Zustand einnehmen können.

Die Programmmodule können sich beim Ausführen der jeweiligen Fehlerbehandlungsfunktionen unmittelbar oder nach Beenden einer Programmfunktion des Programmmoduls in einen vordefinierten Zustand versetzen. Bei einem unmittelbaren Versetzen in den vordefinierten Zustand, beispielsweise einen Ausgangszustand, können dabei laufende Programmfunktionen des Programmmoduls auch abgebrochen werden, um ein möglichst schnelles Zurücksetzen zu ermöglichen. Wenn das Zurücksetzen erst nach dem Beenden einer Programmfunktion erfolgt, können aber, je nach Funktion des Programmmoduls, Datenverluste vermieden werden, welche durch das Abbrechen einer laufenden Programmfunktion unter Umständen entstehen würden.

Das Programmmodul, in dem der Fehlerzustand aufgetreten ist, kann nach dem Senden der lokalen Fehlermeldung und den entsprechenden Schritten im Betriebssystem von diesem ebenfalls mit einer Fehlerbehandlungsfunktion aufgerufen werden, um diese auszuführen. Alternativ kann dieses betroffene Programmmodul jedoch nach dem Senden der lokalen Fehlermeldung auch selbständig eine entsprechende Fehlerbehandlungsfunktion ausführen. Üblicherweise wird hierbei das Programmmodul versuchen, sich unmittelbar in einen vordefinierten Zustand zu versetzen, da zu erwarten ist, dass bei Auftreten eines Fehlerzustands eine Programmfunktion nicht mehr korrekt abgearbeitet werden kann.

Ein Ausführungsbeispiel eines digitalen Tachographensystems weist eine Vielzahl von Baugruppen und eine Steuerungseinheit auf, die dazu eingerichtet ist, ein Programmsystem zur Steuerung der entsprechenden Baugruppen aus der Vielzahl von Baugruppen auszuführen, wobei das Programmsystem ein Betriebssystem und eine Gruppe von Programmmodulen aufweist, die durch das Betriebssystem ansteuerbar und einer ersten oder wenigstens zweiten Funktionsgruppe zugeordnet sind. Die Steuerungseinheit ist dabei derart eingerichtet, dass beim Auftreten eines Fehlerzustands in einem Programmmodul aus der Gruppe von Programmmodulen das betroffene Programmmodul eine lokale Fehlermeldung an das Betriebssystem sendet. Das Betriebssystem ermittelt die dem betroffene Programmmodul zugeordnete Funktionsgruppe in Abhängigkeit der lokalen Fehlermeldung. Die Steuerungseinheit ist ferner dazu eingerichtet, dass das Betriebssystem jeweilige Fehlerbehandlungsfunktionen für weitere Programmmodule aus der Gruppe von Programmmodulen, die der Funktionsgruppe des betroffenen Programmmoduls zugeordnet sind, in Abhängigkeit der lokalen Fehlermeldung ermittelt. Ferner ruft das Betriebssystem die jeweils ermittelten Fehlerbehandlungsfunktionen für die weiteren Programmmodule auf, wobei das jeweils entsprechende Programmmodul der weiteren Programmmodule die jeweilige Fehlerbehandlungsfunktion ausführt.

Vorzugsweise weist das Tachographensystem hierfür ein Speichermedium auf, auf dem Programmcode für das Programmsystem ablegbar ist.

Mit einem derartigen Tachographensystem ist es möglich, ein Programmsystem auszuführen, das bei einem Fehler in einem der Programmmodule des Programmsystems gezielt eine lokale Fehlerbehandlung für das betroffene Programmmodul und für über eine Funktionsgruppe zugeordnete Programmmodule durchführen kann. Somit lässt sich vorteilhaft ein Neustart des gesamten Programmsystems im Tachographensystem vermeiden.

Bei verschiedenen Ausführungsformen des Tachographensystems ist die Steuerungseinheit dazu eingerichtet, Verfahren in dem Programmsystem auszuführen, welche zuvor bei den Ausführungsbeispielen für das Verfahren zur Fehlerbehandlung erläutert wurden.

Im Folgenden wird die Erfindung an mehreren Ausführungsbeispielen anhand der Figuren näher erläutert. Funktions- beziehungsweise wirkungsgleiche Elemente tragen dabei gleiche Bezugszeichen. Es zeigen:
- Figur 1: ein erstes Ausführungsbeispiel eines Programmsystems,
- Figur 2: ein zweites Ausführungsbeispiel eines Programmsystems und
- Figur 3: ein Ausführungsbeispiel eines digitalen Tachographensystems.

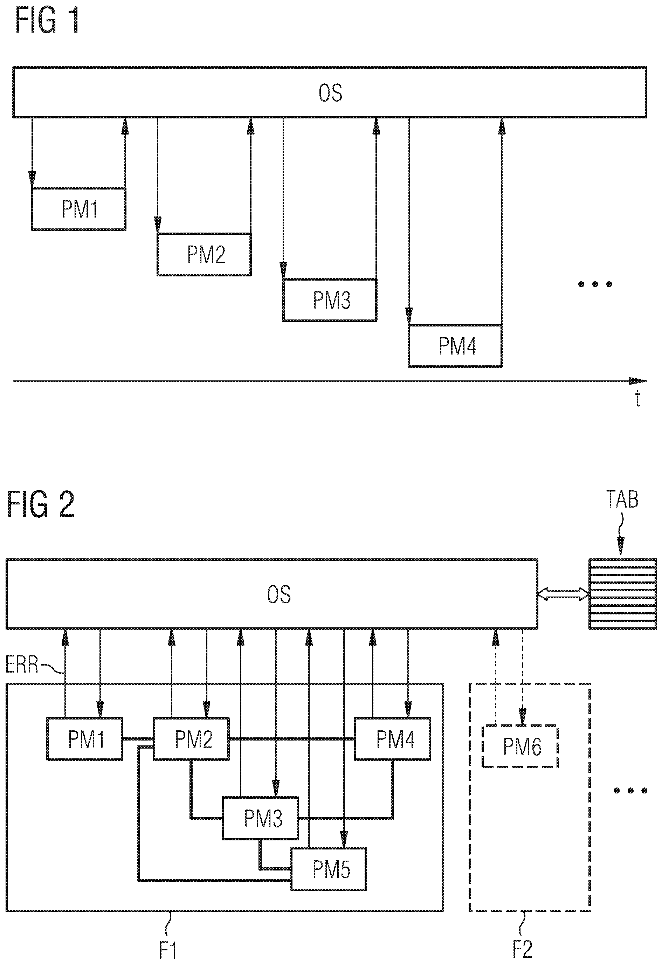

Figur 1 zeigt ein Ausführungsbeispiel eines Programmsystems mit einem Betriebssystem OS und mehreren Programmmodulen PM1 - PM4, die in Abhängigkeit einer Steuerung durch das Betriebssystem OS ausgeführt werden. Hierbei ist das Programmsystem in Abhängigkeit einer Zeitachse t dargestellt.

Das Betriebssystem OS des Programmsystems ist derart dargestellt, dass es dauerhaft im Vordergrund beziehungsweise im Hintergrund ausgeführt wird. In dem Ausführungsbeispiel werden die Programmmodule PM1 - PM4 sequentiell vom Betriebssystem OS aufgerufen, führen ihre jeweiligen Programmfunktionen aus und übergeben die Steuerung des Programmsystems jeweils wieder an das Betriebssystem OS zurück. Hierbei ist der Aufruf der Programmmodule durch die Pfeile nach unten, ausgehend vom Betriebssystem OS, und die Rückgabe der Steuerung durch die Pfeile nach oben, ausgehend von den Programmmodulen PM1 - PM4 zum Betriebssystem OS dargestellt. Während der Zeiträume, in denen Programmfunktionen in den Programmmodulen PM1 - PM4 ausgeführt werden, arbeiten die Betriebssystemfunktionen im Betriebssystem OS im Hintergrund, wobei in bekannter Weise wichtige Betriebssystemfunktionen auch mit Priorität bearbeitet werden können, beispielsweise durch Steuerung über Unterbrechungsanforderungen, englisch Interrupts. Ein derartiger Ablauf in einem Programmsystem kann auch als Multitaskingverfahren bezeichnet werden.

Die Programmfunktionen, die in den Programmmodulen PM1 - PM4 ausgeführt werden, dienen beispielsweise einer Steuerung oder Regelung von Bauteilgruppen in einem digitalen Tachographensystem. Neben den Programmmodulen PM1 - PM4 kann das Programmsystem auch weitere Programmmodule aufweisen, die für individuelle Funktionen im Tachographensystem vorgesehen sind.

Figur 2 zeigt ein weiteres Ausführungsbeispiel eines Programmsystems mit einem Betriebssystem OS, Programmmodulen PM1 - PM6 sowie einer Tabelle TAB. Die Programmmodule PM1 - PM5 sind hierbei einer ersten Funktionsgruppe F1 zugeordnet, während das Programmmodul PM6 einer zweiten Funktionsgruppe F2 zugeordnet ist. In anderen Ausführungsformen umfasst die zweite Funktionsgruppe F2 auch weitere Programmmodule, die hier aus Übersichtsgründen nicht dargestellt sind. Ebenso ist es möglich, dass neben den zwei Funktionsgruppen F1, F2 auch weitere Funktionsgruppen mit zusätzlichen Programmmodulen vorgesehen sind.

Die Programmmodule PM1 - PM5 der ersten Funktionsgruppe F1 sind über verschiedene Softwareschnittstellen miteinander verbunden, die beispielsweise als Puffer oder Zwischenspeicher ausgeführt sind. In dem dargestellten Programmsystem sind beispielsweise Softwareschnittstellen zwischen den Programmmodulen PM1, PM2, zwischen PM2 und PM4, zwischen PM2 und PM4, zwischen PM2 und PM3, zwischen PM2 und PM5, zwischen PM3 und PM5 sowie zwischen PM4 und PM3 vorgesehen, jeweils gekennzeichnet durch eine dicke Verbindungslinie.

Das Programmsystem ist für Bauteilgruppen in einem digitalen Tachographensystem vorgesehen, das beispielsweise einen Drucker beziehungsweise Druckeranschluss, einen Chipkartenleser, eine Datenaufzeichnungseinheit sowie weitere Baugruppen umfasst. Diese Baugruppen lassen sich weiter in Untergruppen unterteilen, die voneinander im Wesentlichen unabhängige Funktionen innerhalb der Baugruppe ausführen. Die Steuerung der Baugruppen beziehungsweise der Untergruppen erfolgt durch jeweils zugeordnete Programmmodule, die entsprechend der Einteilung in Baugruppen beziehungsweise Untergruppen zu entsprechenden Funktionsgruppen zusammengefasst sind. Die Programmmodule innerhalb einer Funktionsgruppe, dargestellt beispielsweise an den Funktionsgruppen F1, F2, weisen untereinander gewisse Abhängigkeiten auf, so dass eine ordnungsgemäße Ausführung eines Programmmoduls innerhalb der Funktionsgruppe von einem fehlerfreien Zustand der übrigen Programmmodule der Funktionsgruppe abhängt.

Aufgrund von Unabwägbarkeiten in der Programmierung beziehungsweise im Ablauf der Programmmodule, kann es zu Laufzeitfehlern innerhalb eines der Programmmodule kommen. Jedes Programmmodul PM1 - PM6 weist einen Erkennungsmechanismus beziehungsweise eine Erkennungsroutine für derartige Laufzeitfehler oder andere Fehlerzustände auf.

Wenn also ein Fehlerzustand in einem der Programmmodule PM1 - PM5 der ersten Funktionsgruppe F1 auftritt, kann dieser Fehlerfall allen Programmmodulen, mit denen es verbunden ist, über die Softwareschnittstellen weitergegeben werden. Diese geben es an die übrigen Programmmodule in der Funktionsgruppe F1 weiter, mit denen sie verbunden sind. Um einen definierten Zustand in dem Programmsystem beziehungsweise in den Programmmodulen der Funktionsgruppe F1 herzustellen, setzen sich die entsprechenden Programmmodule PM1 - PM5 selbst auf einen definierten Zustand zurück. Dies kann beispielsweise auch nach einem zuvor bestimmten Zeitplan geschehen. Wenn beispielsweise ein Fehlerzustand oder ein Laufzeitfehler im ersten Programmmodul PM1 auftritt, kann dieser Zustand über die Schnittstelle an das zweite Programmmodul PM2 weitergemeldet werden. Das Programmmodul PM2 wiederum gibt den Fehlerzustand an die übrigen Programmmodule PM3, PM4, PM5 der ersten Funktionsgruppe F1 weiter, so dass alle Programmmodule PM1 - PM5 der Funktionsgruppe F1 Kenntnis über den Fehlerzustand innerhalb der Funktionsgruppe haben. Daraufhin kann jedes einzelne Programmmodul eine Neuinitialisierung einleiten. Ein Übermitteln der Fehlerzustände an die übrigen Programmmodule innerhalb der Funktionsgruppe, die selbst keinen Fehlerzustand aufweisen, hängt jedoch von einer Funktionsfähigkeit der Softwareschnittstellen ab, über die die Programmmodule miteinander verbunden sind.

Bei einem anderen Ausführungsbeispiel eines Verfahrens zur lokalen Fehlerbehandlung kann jedes der Programmmodule PM1 - PM6 beim Auftreten eines lokalen Fehlerzustands in dem Programmmodul eine lokale Fehlermeldung ERR an das Betriebssystem OS schicken. Das Betriebssystem OS ermittelt aus der lokalen Fehlermeldung ERR die Funktionsgruppe des betroffenen Programmmoduls. Beispielsweise wird durch einen entsprechenden Erkennungsmechanismus ein Fehlerzustand im ersten Programmmodul PM1 festgestellt, der über die lokale Fehlermeldung ERR an das Betriebssystem OS gemeldet wird. Das Betriebssystem OS kann aus der lokalen Fehlermeldung ERR ermitteln, dass ein Fehlerzustand in der ersten Funktionsgruppe F1, dem das erste Programmmodul PM1 zugeordnet ist, aufgetreten ist. Die Information über die Funktionsgruppe F1 ist beispielsweise von der lokalen Fehlermeldung ERR umfasst. Alternativ kann vom Betriebssystem OS auch erkannt werden, dass die lokale Fehlermeldung ERR vom ersten Programmmodul PM1 abgesendet wurde und aus dieser Information zusammen mit dem Wissen, dass das erste Programmmodul PM1 der ersten Funktionsgruppe F1 zugeordnet ist, die entsprechende Funktionsgruppe ermitteln, in der eine Fehlerbehandlung durchzuführen ist.

Das Betriebssystem OS liest in Abhängigkeit dieser Information einen Satz von Fehlerbehandlungsfunktionen aus der Tabelle TAB aus, in der eine Vielzahl von Sätzen von Fehlerbehandlungsfunktionen abgelegt sind. Beispielsweise ist für jede der im Programmsystem vorhandenen Funktionsgruppen F1, F2 ein entsprechender Satz von Fehlerbehandlungsfunktionen abgelegt. Alternativ können auch für jedes der Programmmodule entsprechende Sätze von Fehlerbehandlungsfunktionen in der Tabelle TAB abgelegt sein, die beim Auftreten eines Fehlerzustands in dem betroffenen Programmmodul aus der Tabelle TAB auslesbar sind.

Der jeweils aus der Tabelle TAB zurückgelieferte Satz von Fehlerbehandlungsfunktionen kann Informationen über eine Reihenfolge enthalten, in der die Fehlerbehandlungsfunktionen aufgerufen werden sollen. Hierbei ist jede der Fehlerbehandlungsfunktionen einem bestimmten Programmmodul zugeordnet.

Mit Verweis auf das oben angeführte Beispiel, dass ein Fehlerzustand im Programmmodul PM1 aufgetreten ist, werden beispielsweise Fehlerbehandlungsfunktionen für die Programmmodule PM2 - PM5 zurückgeliefert. Das Betriebssystem OS ruft demnach die entsprechenden Programmmodule PM2 - PM5 mit diesen Fehlerbehandlungsfunktionen auf, dargestellt durch die Pfeile vom Betriebssystem OS zu den Programmmodulen PM2 - PM5.

Eine Programmfunktion des Programmmoduls PM6, das der zweiten Funktionsgruppe F2 zugeordnet ist, ist im vorliegenden Beispiel unabhängig von einer Funktion der Programmmodule der ersten Funktionsgruppe F1. Daher kann das Ausführen des Programmmoduls PM6 ungeachtet eines Fehlerzustands eines der Programmmodule PM1 - PM5 der ersten Funktionsgruppe F1 erfolgen.

Durch den Aufruf der Fehlerbehandlungsfunktionen in den Programmmodulen PM2 - PM5 werden diese in den entsprechenden Programmmodulen jeweils ausgeführt, wobei sich das ausführende Programmmodul unmittelbar oder nach Beenden einer Programmfunktion in einen vordefinierten Zustand versetzt. Unabhängig davon, ob die Reihenfolge des Aufrufs der Fehlerbehandlungsfunktionen durch eine Information in der Tabelle TAB vorgegeben ist, werden die Fehlerbehandlungsfunktionen vom Betriebssystem sequentiell aufgerufen. Beim Ausführen der Fehlerbehandlungsfunktionen in einem Programmmodul hat dieses die Freiheit, entsprechend selbst zu reagieren und sich in geeigneter Weise zurückzusetzen. Hierbei kann es vom Programmzustand des Programmmoduls abhängen, ob ein unmittelbares Zurücksetzen, bei dem laufende Funktionen abgebrochen werden, oder ein Beenden einer laufenden oder noch anzustoßenden Programmfunktion vor dem Zurücksetzen abgewartet werden soll.

Da im vorliegenden Beispiel das Programmmodul PM1 seinen Fehlerzustand kennt, kann dieses seine entsprechende Fehlerbehandlungsfunktion selbst aufrufen. Alternativ kann jedoch der Aufruf der Fehlerbehandlungsfunktion auch für das betroffene Programmmodul PM1 auch vom Betriebssystem OS gesteuert werden.

Beim Auftreten eines Fehlerzustands in einem Programmmodul einer Funktionsgruppe kann somit diese Funktionsgruppe mit ihren Programmmodulen einzeln zurückgesetzt werden, ohne dass die übrigen Funktionsgruppen in ihrer Funktion beeinträchtigt oder unterbrochen wären. Somit lässt sich beispielsweise ein Datenverlust in den nicht betroffenen Funktionsgruppen beziehungsweise Programmmodulen verhindern. Des Weiteren kann ein derartiges Programmsystem schneller in einen definierten Zustand zurückgesetzt werden, da weniger beteiligte Programmmodule eine entsprechende Initialisierungsfunktion als Folge einer Fehlerbehandlungsfunktion ausführen müssen. Hierfür ist es bei der Entwicklung des Programmsystems lediglich erforderlich, möglichst unabhängige Funktionsgruppen für die Baugruppen des Tachographensystems zu definieren, die ohne gegenseitige Beeinträchtigung zurückgesetzt werden können.

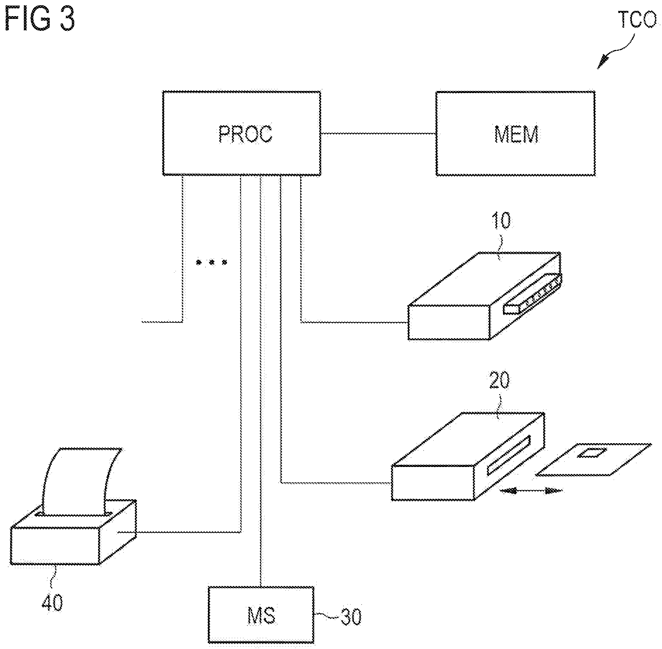

Figur 3 zeigt ein Ausführungsbeispiel eines digitalen Tachographensystems TCO, das eine Steuerungseinheit PROC und ein daran angeschlossenes Speichermedium MEM aufweist. In der Steuerungseinheit PROC des Tachographensystems TCO ist ein Programmsystem ausgeführt, dessen Programmcode vorzugsweise in dem Speichermedium MEM abgelegt ist. An die Steuerungseinheit PROC sind im vorliegenden Ausführungsbeispiel eine Schnittstelleneinheit 10, ein Chipkartenleser beziehungsweise Kartenlesegerät 20 zum Auslesen von Chipkarten, ein Geschwindigkeitsgeber oder Bewegungssensor 30, englisch motion sensor, ein Drucker 40 und weitere mögliche Peripherieeinheiten angeschlossen.

Die Steuerungseinheit PROC kann mit Hilfe des Programmsystems die Funktionen der angeschlossenen Baugruppen 10 - 40 steuern. Hierzu weist das Programmsystem, wie für Figur 2 beschrieben, mehrere Funktionsgruppen mit jeweiligen Programmmodulen auf, die die jeweiligen Steuerungsfunktionen der Baugruppen 10 - 40 übernehmen können. Beispielsweise ist für jede der Baugruppen 10 - 40 eine oder mehrere Funktionsgruppen mit jeweils einem oder mehreren Programmmodulen vorgesehen.

Beim Ausführen des Programmsystems zur Steuerung der Baugruppen 10 - 40 des Tachographensystems TCO ist die Ausführung entsprechender Programmmodule beziehungsweise Funktionsgruppen für die Schnittstelleneinheit 10 unabhängig von einer Programmausführung für den Chipkartenleser 20. Wenn beispielsweise durch einen Erkennungsmechanismus in einem Programmmodul des Chipkartenlesers 20 ein Fehlerzustand detektiert wird, ist es ausreichend, mit den oben beschriebenen Verfahren ein Rücksetzen derjenigen Programmmodule der Funktionsgruppe des Chipkartenlesers 20 auszulösen, ohne den Funktionsablauf von Programmmodulen zu beeinflussen, die die Schnittstelleneinheit 10 beziehungsweise den Bewegungssensor 30 oder den Drucker 40 betreffen.

Bei einem Fehlerzustand im Chipkartenleser 20 beziehungsweise den entsprechenden Programmmodulen, können somit entsprechende Fehlerbehandlungsfunktionen der zugehörigen Programmmodule der Funktionsgruppe aufgerufen werden, welche beispielsweise bei einem stattfindenden Lesevorgang einer Chipkarte diesen abbrechen und die in das Kartenlesegerät 20 eingesteckte Chipkarte auswerfen. Danach können sich die Programmmodule der vom Fehlerzustand betroffenen Funktionsgruppe in einen vordefinierten Zustand zurücksetzen.

Die Betriebsbereitschaft des Tachographensystems bleibt im Übrigen davon unberührt.

## Patentansprüche

1. Verfahren zur Fehlerbehandlung in einem Programmsystem in einem digitalen Tachographensystem (TCO) mit einer Vielzahl von Baugruppen (10 - 40), bei dem das Programmsystem ein Betriebssystem (OS) und eine Gruppe von Programmmodulen (PM1 - PM6) aufweist, die durch das Betriebssystem (OS) ansteuerbar und einer ersten oder einer wenigstens zweiten Funktionsgruppe (F1, F2) zugeordnet sind, wobei jede der Baugruppen (10 - 40) durch die erste und/oder die wenigstens eine zweite Funktionsgruppe (F1, F2) steuerbar ist, das Verfahren umfassend:
- beim Auftreten eines Fehlerzustands in einem Programmmodul (PM1) aus der Gruppe von Programmmodulen (PM1 - PM6), Senden einer lokalen Fehlermeldung (ERR) durch das betroffene Programmmodul (PM1) an das Betriebssystem (OS);
- Ermitteln der dem betroffenen Programmmodul (PM1) zugeordneten Funktionsgruppe (F1, F2) in Abhängigkeit der lokalen Fehlermeldung (ERR) durch das Betriebssystem (OS) ;
- Ermitteln von jeweiligen Fehlerbehandlungsfunktionen für weitere Programmmodule aus der Gruppe von Programmmodulen (PM1 - PM6), die der Funktionsgruppe (F1, F2) des betroffenen Programmmoduls (PM1) zugeordnet sind, durch das Betriebssystem (OS) in Abhängigkeit der lokalen Fehlermeldung (ERR);
- Aufruf der jeweils ermittelten Fehlerbehandlungsfunktion für die weiteren Programmmodule durch das Betriebssystem (OS); und
- Ausführen der jeweiligen Fehlerbehandlungsfunktion in den entsprechenden Programmmodulen der weiteren Programmmodule.

2. Verfahren nach Anspruch 1, bei dem das Programmmodul (PM1), in dem der Fehlerzustand aufgetreten ist, nach dem Senden der lokalen Fehlermeldung (ERR) selbständig eine entsprechende Fehlerbehandlungsfunktion ausführt.

3. Verfahren nach Anspruch 1 oder 2, bei dem die lokale Fehlermeldung (ERR) eine Information über die Zuordnung zu der Funktionsgruppe (F1, F2) enthält.

4. Verfahren nach einem der Ansprüche 1 bis 3, bei dem eine Vielzahl von Sätzen von Fehlerbehandlungsfunktionen in einer Tabelle (TAB) abgelegt sind und beim Ermitteln der Fehlerbehandlungsfunktionen vom Betriebssystem (OS) ein Satz der Vielzahl von Sätzen aus der Tabelle (TAB) ausgelesen wird.

5. Verfahren nach Anspruch 4, bei dem das Auslesen in Abhängigkeit der zugeordneten Funktionsgruppe (F1, F2) erfolgt.

6. Verfahren nach Anspruch 4, bei dem das Auslesen in Abhängigkeit des betroffenen Programmmoduls (PM1) erfolgt.

7. Verfahren nach einem der Ansprüche 1 bis 6, bei dem eine Reihenfolge des Aufrufs der ermittelten Fehlerbehandlungsfunktionen vorbestimmt ist.

8. Verfahren nach einem der Ansprüche 1 bis 7, bei dem beim Ausführen der jeweiligen Fehlerbehandlungsfunktion das ausführende Programmmodul sich unmittelbar oder nach Beenden einer Programmfunktion in einen vordefinierten Zustand versetzt.

9. Verfahren nach einem der Ansprüche 1 bis 8, bei dem das jeweilige Programmmodul einen eigenen Fehlererkennungsmechanismus aufweist, und das Auftreten des Fehlerzustands von dem betroffenen Programmmodul (PM1) durch den Fehlererkennungsmechanismus erkannt wird.

10. Verfahren nach einem der Ansprüche 1 bis 9, bei dem die Gruppe von Programmmodulen (PM1 - PM6) zur Steuerung entsprechender Baugruppen des digitalen Tachographensystems (TCO) vorgesehen sind.

11. Verfahren nach einem der Ansprüche 1 bis 10, bei dem das Ausführen von Programmmodulen einer der Funktionsgruppen unabhängig vom Ausführen von Programmmodulen einer anderen der Funktionsgruppen ist.

12. Digitales Tachographensystem (TCO) mit einer Vielzahl von Baugruppen (10 - 40) und einer Steuerungseinheit (PROC), die dazu eingerichtet ist, ein Programmsystem zur Steuerung entsprechender Baugruppen aus der Vielzahl von Baugruppen (10 - 40) auszuführen, das Programmsystem aufweisend ein Betriebssystem (OS) und eine Gruppe von Programmmodulen (PM1 - PM6), die durch das Betriebssystem (OS) ansteuerbar und einer ersten oder einer wenigstens zweiten Funktionsgruppe (F1, F2) zugeordnet sind, wobei jede der Baugruppen (10 - 40) durch die erste und/oder die wenigstens eine zweite Funktionsgruppe (F1, F2) steuerbar ist, und wobei die Steuerungseinheit (PROC) dazu eingerichtet ist, dass
- beim Auftreten eines Fehlerzustands in einem Programmmodul (PM1) aus der Gruppe von Programmmodulen (PM1-PM6) das betroffene Programmmodul (PM1) eine lokale Fehlermeldung (ERR) an das Betriebssystem (OS) sendet;
- das Betriebssystem (OS) die dem betroffenen Programmmodul (PM1) zugeordnete Funktionsgruppe (F1, F2) in Abhängigkeit der lokalen Fehlermeldung (ERR) ermittelt;
- das Betriebssystem (OS) jeweilige Fehlerbehandlungsfunktionen für weitere Programmmodule aus der Gruppe von Programmmodulen (PM1 - PM6), die der Funktionsgruppe (F1, F2) des betroffenen Programmmoduls (PM1) zugeordnet sind, in Abhängigkeit der lokalen Fehlermeldung (ERR) ermittelt;
- das Betriebssystem (OS) die jeweils ermittelte Fehlerbehandlungsfunktion für die weiteren Programmmodule aufruft; und
- das entsprechende Programmmodul der weiteren Programmmodule die jeweilige Fehlerbehandlungsfunktion ausführt.

13. Tachographensystem (TCO) nach Anspruch 12, das ein Speichermedium (MEM) aufweist, auf dem Programmcode für das Programmsystem ablegbar ist.

14. Tachographensystem (TCO) nach Anspruch 12 oder 13, bei dem die Steuerungseinheit (PROC) dazu eingerichtet ist, die einer der Funktionsgruppen zugeordneten Programmmodule unabhängig von den einer anderen der Funktionsgruppen zugeordneten Programmmodulen auszuführen.

## Claims

1. Method for error handling in a program system in a digital tachography system (TCO) with a large number of assemblies (10 - 40), in which the program system comprises an operating system (OS) and a group of program modules (PM1 - PM6) that are controllable by the operating system (OS) and are assigned to a first or an at least second function group (F1, F2), wherein each of the assemblies (10 - 40) is controllable by the first and/or the at least one second function group (F1, F2), the method comprising:
- sending, on the occurrence of an error state in a program module (PM1) from the group of program modules (PM1 - PM6), a local error message (ERR) by the program module (PM1) affected to the operating system (OS);
- determining the function group (F1, F2) assigned to the program module (PM1) affected depending on the local error message (ERR) by the operating system (OS);
- determining respective error handling functions for further program modules from the group of program modules (PM1 - PM6) that are assigned to the function group (F1, F2) of the program module (PM1) affected by the operating system (OS) depending on the local error message (ERR);
- calling the respectively determined error handling function for the further program modules by the operating system (OS); and
- executing the respective error handling function in the corresponding program modules of the further program modules.

2. Method according to Claim 1, in which the program module (PM1) in which the error state has occurred autonomously executes an appropriate error handling function after sending the local error message (ERR).

3. Method according to Claim 1 or 2, in which the local error message (ERR) contains information about the assignment to the function group (F1, F2).

4. Method according to one of Claims 1 to 3, in which a large number of sets of error handling functions are stored in a table (TAB), and one set of the large number of sets is read from the table (TAB) by the operating system (OS) when determining the error handling functions.

5. Method according to Claim 4, in which the reading is performed depending on the assigned function group (F1, F2).

6. Method according to Claim 4, in which the reading is performed depending on the program module (PM1) affected.

7. Method according to one of Claims 1 to 6, in which a sequence of the calls to the error handling functions determined is predetermined.

8. Method according to one of Claims 1 to 7, in which, when executing the respective error handling function, the executing program module places itself into a predefined state immediately or after completion of a program function.

9. Method according to one of Claims 1 to 8, in which the respective program module comprises its own error detection mechanism, and the occurrence of the error state is detected by the program module (PM1) affected through the error detection mechanism.

10. Method according to one of Claims 1 to 9, in which the group of program modules (PM1 - PM6) is provided for the control of corresponding assemblies of the digital tachography system (TCO).

11. Method according to one of Claims 1 to 10, in which the execution of program modules of one of the function groups is independent of the execution of program modules of another one of the function groups.

12. Digital tachography system (TCO) with a large number of assemblies (10 - 40), and a control unit (PROC) that is designed to execute a program system for the control of corresponding assemblies out of the large number of assemblies (10 - 40), the program system comprising an operating system (OS) and a group of program modules (PM1 - PM6) that are controllable by the operating system (OS) and are assigned to a first or an at least second function group (F1, F2), wherein each of the assemblies (10 - 40) is controllable by the first and/or the at least one second function group (F1, F2), and wherein the control unit (PROC) is so designed that
- on the occurrence of an error state in a program module (PM1) from the group of program modules (PM1 - PM6) the program module (PM1) affected sends a local error message (ERR) to the operating system (OS);
- the operating system (OS) determines the function group (F1, F2) assigned to the program module (PM1) affected depending on the local error message (ERR);
- the operating system (OS) determines respective error handling functions for further program modules from the group of program modules (PM1 - PM6) that are assigned to the function group (F1, F2) of the program module (PM1) affected depending on the local error message (ERR);
- the operating system (OS) calls the respectively determined error handling function for the further program modules; and
- the corresponding program module of the further program modules executes the respective error handling function.

13. Tachography system (TCO) according to Claim 12, that comprises a storage medium (MEM) on which the program code for the program system can be placed.

14. Tachography system (TCO) according to Claim 12 or 13, in which the control unit (PROC) is designed to execute the program modules assigned to one of the function groups independently of the program modules assigned to another one of the function groups.

## Revendications

1. Procédé de traitement d'erreur dans un système de programme d'un système de tachygraphe numérique (TCO) comportant une pluralité de modules (10 - 40), dans lequel le système de programme comporte un système d'exploitation (OS) et un groupe de modules de programmes (PM1 - PM6), qui peuvent être commandés par le système d'exploitation (OS) et qui sont associés à un premier ou à au moins un deuxième groupe de fonctions (F1, F2), dans lequel chacun des modules (10 - 40) peut être commandé par le premier et/ou l'au moins un deuxième groupe de fonctions (F1, F2), le procédé comprenant :
- lors de la survenue d'un état d'erreur dans un module de programme (PM1) provenant du groupe de modules de programmes (PM1 - PM6), l'envoi d'un message d'erreur local (ERR) par le module de programme concerné (PM1) au système d'exploitation (OS) ;
- la détermination du groupe de fonctions (F1, F2) associé au module de programme concerné (PM1) en fonction du message d'erreur local (ERR) par le système d'exploitation (OS) ;
- la détermination de fonctions de traitement d'erreur respectives pour d'autres modules de programmes provenant du groupe de modules de programmes (PM1 - PM6), qui sont associées au groupe de fonctions (F1, F2) du module de programme concerné (PM1), par le système d'exploitation (OS), en fonction du message d'erreur local (ERR) ;
- l'appel de la fonction de traitement d'erreur respective déterminée pour les autres modules de programmes par le système d'exploitation (OS) ; et
- l'exécution de la fonction de traitement d'erreur respective dans les modules de programmes correspondants des autres modules de programmes.

2. Procédé selon la revendication 1, dans lequel le module de programme (PM1) dans lequel l'état d'erreur est survenu exécute automatiquement une fonction de traitement d'erreur correspondante après l'envoi du message d'erreur local (ERR).

3. Procédé selon la revendication 1 ou 2, dans lequel le message d'erreur local (ERR) contient une information concernant l'association au groupe de fonctions (F1, F2).

4. Procédé selon l'une quelconque des revendications 1 à 3, dans lequel une pluralité d'ensembles de fonctions de traitement d'erreur sont stockés dans un tableau (TAB) et un ensemble de la pluralité d'ensembles est lu depuis le tableau (TAB) lors de la détermination des fonctions de traitement d'erreur par le système d'exploitation (OS).

5. Procédé selon la revendication 4, dans lequel la lecture est effectuée en fonction du groupe de fonctions associé (F1, F2).

6. Procédé selon la revendication 4, dans lequel la lecture est effectuée en fonction du module de programme concerné (PM1).

7. Procédé selon l'une quelconque des revendications 1 à 6, dans lequel un ordre d'appel des fonctions de traitement d'erreur déterminées est prédéterminé.

8. Procédé selon l'une quelconque des revendications 1 à 7, dans lequel, lors de l'exécution de la fonction de traitement d'erreur respective, le module de programme en cours d'exécution bascule dans un état prédéfini directement ou après l'interruption d'une fonction de programme.

9. Procédé selon l'une quelconque des revendications 1 à 8, dans lequel le module de programme respectif comporte un mécanisme de détection d'erreur qui lui est propre, et la survenue de l'état d'erreur du module de programme concerné (PM1) est détectée par le mécanisme de détection d'erreur.

10. Procédé selon l'une quelconque des revendications 1 à 9, dans lequel les groupes de modules de programmes (PM1 - PM6) sont prévus pour commander des modules correspondants du système de tachygraphe numérique (TCO).

11. Procédé selon l'une quelconque des revendications 1 à 10, dans lequel l'exécution de modules de programmes de l'un des groupes de fonctions est indépendante de l'exécution de modules de programmes d'un autre des groupes de fonctions.

12. Système de tachygraphe numérique (TCO) comportant une pluralité de modules (10 - 40) et une unité de commande (PROC), qui est conçue pour exécuter un système de programme destiné à commander des modules correspondants provenant de la pluralité de modules (10 - 40), le système de programme comportant un système d'exploitation (OS) et un groupe de modules de programmes (PM1 - PM6), qui peuvent être commandés par le système d'exploitation (OS) et sont associés à un premier ou à au moins un deuxième groupe de fonctions (F1, F2), dans lequel chacun des modules (10 - 40) peut être commandé par le premier et/ou l'au moins un deuxième groupe de fonctions (F1, F2), et dans lequel l'unité de commande (PROC) est conçue de manière à ce que,
- lors de la survenue d'un état d'erreur dans un module de programme (PM1) provenant du groupe de modules de programmes (PM1 - PM6), le module de programme concerné (PM1) envoie un message d'erreur local (ERR) au système d'exploitation (OS) ;
- le système d'exploitation (OS) détermine le groupe de fonctions (F1, F2) associé au module de programme concerné (PM1) en fonction du message d'erreur local (ERR) ;
- le système d'exploitation (OS) détermine des fonctions de traitement d'erreur respectives pour d'autres modules de programmes provenant du groupe de modules de programmes (PM1 - PM6), qui sont associées au groupe de fonctions (F1, F2) du module de programme concerné (PM1), en fonction du message d'erreur local (ERR) ;
- le système d'exploitation (OS) appelle la fonction de traitement d'erreur respective déterminée pour les autres modules de programmes ; et
- le module de programme correspondant des autres modules de programmes exécute la fonction de traitement d'erreur respective.

13. Système de tachygraphe (TCO) selon la revendication 12, comportant un support de mémoire (MEM) sur lequel peut être stocké un code de programme destiné au système de programme.

14. Système de tachygraphe (TCO) selon la revendication 12 ou 13, dans lequel l'unité de commande (PROC) est conçue de manière à exécuter l'un des modules de programmes associés aux groupes de fonctions en fonction des modules de programmes associés à un autre des groupes de fonctions.
